# EUROPEAN PATENT SPECIFICATION

(11) **EP 0 343 831 B1**
(45) Date of publication and mention of the grant of the patent: **03.01.1996**
(21) Application number: 89304937.9
(22) Date of filing: 15.05.1989
(51) Int. Cl.: C09D 5/08

(54) **Use of a top coat paint for protection from external rust-staining**
Verwendung einer Deckanstrichmasse zum Schutz vor externen Rostflecken
Utilisation d une peinture de revêtement final pour la protection contre des taches de rouille externes

(30) Priority: 16.05.1988 GB 8811520; 12.05.1989 WO PCT/GB89/00514
(43) Date of publication of application: 29.11.1989
(73) Proprietor: COURTAULDS COATINGS (HOLDINGS) LIMITED, London W1A 2BB (GB)
(72) Inventor: Sinclair-Day, John David, Ryton Tyne and Wear (GB); Handyside, Timothy Marc, Newcastle NE2 3NS (GB)
(74) Representative: Hale, Stephen Geoffrey

(56) References cited:
- EP-A- 0 023 371
- EP-A- 0 037 442
- GB-A- 2 172 599

## Description

This invention relates to the use of a top coat paint for protecting surfaces from external rust-staining such as surfaces of structures exposed to the atmosphere, for example buildings, ships and bridges, and surfaces of construction materials which are to be used at the exterior of such structures.

Paints are applied to buildings and other structures exposed to the atmosphere in order to give protection against the weather and for decorative effect. Unfortunately, the appearance of the painted building is often rapidly marred by external rust-staining. The term "external rust-staining" is used herein to mean the discoloration of a surface due to contact from the outside with rust as opposed to discoloration from a source of rust beneath the surface in the underlying substrate. The rust may be from a source external to the surface, for example water containing rust in the form of dissolved corrosion products falling onto or flowing down the surface. Iron and steel pipework, guttering and girders and other construction members may have considerable surface rust whilst still structurally sound. When it rains, rust in the form of dissolved corrosion products drips onto any surfaces below and causes an ugly brown stain which is very difficult to remove. The rust may be from an isolated damage site on the surface, causing a brown stain on the intact paint below the damage site. One area where this causes particular problems is on the superstructure of ships and the upper part of the topside of ships' hulls, particularly for passenger ships such as cruise liners and ferries. These may become externally rust-stained soon after repainting. Examples of rust sources on ships are isolated damage sites, for example where the anchor chains strike the hull, and inaccessible parts of the superstructure which may be left unpainted. The paint of the present invention inhibits such external rust-staining.

GB-A-2172599 describes a process for inhibiting external rust-staining on a surface by painting the surface with a top coat paint comprising a film-forming binder and a substance capable of reacting with rust to form a colourless material. The substance can for example be a polyphosphonate salt pigment, an oxalate or a glass releasing phosphate ions.

EP-A-209231 describes a water-based coating for ferrous substrates and containing a carboxylic acid such as oxalic, lactic or tartaric acid to prevent "flash rusting", that is staining of the coating as it dries by rust arising from the ferrous substrate.

EP-A-O,023,371 discloses coating compositions that may be applied under water. These compositions comprise a film-forming resin, a complexing agent forming a complex with an oxidised iron surface, and a non-reactive solvent which is partly soluble in water. Examples of the complexing agent include aliphatic, aromatic and heterocyclic mono- and polycarboxylic acids; adducts of maleic acid or its anhydride with olefins, thiols or primary or secondary amines; 1,3-diketones; N-hydroxyimides; aliphatic, cycloaliphatic, vinyl, allyl, benzyl or aromatic hydroxamic acids; and hydroxyquinoline or benzoxazine or their derivatives. The complexing agent reacts with the ferrous hydroxide that is formed when an iron surface is cleaned or with the iron surface itself. The complexing agent is soluble in the coating composition, whereas it is only weakly soluble in water. The complex formed after application of the coating composition is preferably non-hydrophilic, not containing any water, and should be compatible with the dry coating layer.

EP-A-0,037,442 discloses corrosion-inhibiting compositions which comprise 5-95% by weight of a barium salt of a carbonyl group-containing organic compound having at least one acidic hydroxy hydrogen. Representative of such compounds are substantially water-insoluble hydrous and anhydrous barium salts of organic acids, saturated, ethylenically unsaturated, or aromatic. The carbonyl groups may be present as carboxy ester, carboxyl, aldo, keto or amido groups. These corrosion-inhibiting compositions can be applied directly to the bare metal or over an adhesion-promoting primer.

The paints of GB-A-2172599 have proved effective in inhibiting brown stains caused by rust. However, the colourless material formed by reaction of the substances described in GB-A-2172599 with rust is in general not water-soluble and a white deposit may be formed towards the end of the lifetime of the paint. Whilst its presence is not noticeable in white and lightly coloured paints it may be noticeable in deeply coloured paints. The present invention provides an improved paint for inhibiting external rust-staining.

According to the present invention there is provided the use of a top coat paint for protecting a surface from external rust-staining, comprising a film-forming binder and a solid substance having a water-solubility of at least 0.1 gram per litre and capable of reacting with rust, characterised in that the substance capable of reacting with rust is capable of chelating iron and has a high formation constant for complexation with Fe(III), the chelate complex formed with Fe(III) being substantially colourless and remaining substantially colourless over prolonged periods of time and being no less water-soluble than the said substance, the said substance being
(a) a salt of an aliphatic carboxylic acid substituted by a hydroxy, amine, hydroxyamine, thiol, keto, aldehyde or oxime group, or
(b) a salt of a 1,3-diketone, or
(c) an aliphatic hydroxamic acid of the formula 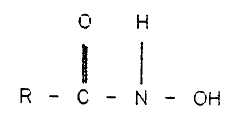 in which R is an alkyl group of 1 to 18 carbon atoms.

By "a substance capable of reacting with rust" is meant a substance capable of reacting with water-borne iron corrosion products which form solid rust (ferric oxide) on drying in air.

The invention also includes a process for protecting a surface from external rust-staining, characterised in that a top coat paint as defined above is applied to the external surface of a structure or to a construction material intended for use at the external surface of a structure. The term "structure" is used to include ships as well as land-based structures.

The surface of the ship or other structure or of the construction material which is to be protected from external rust-staining may for example be of metal, wood, brick, concrete, plaster, plastics or fibre board. By a "top coat paint" is meant a paint which is intended to be exposed in use, that is it is not to be overcoated. When the paint is applied to a non-metallic surface, for example masonry such as brick or concrete, it may be the only coating applied to the surface, whereas when it is applied to metal it is generally applied over a primer. Such a primer is generally one containing an anticorrosive pigment but it does not usually contain a substance capable of reacting with rust to form a colourless or soluble material.

The substance capable of reacting with rust preferably has a formation constant for complexation with Fe(III) greater than 10⁰ moles⁻¹. This refers to the first formation constant. In the case of salts as the substance capable of reacting with rust it refers to the anionic form, that is to say it is the equilibrium constant for the reaction 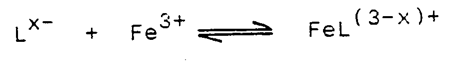 where L^{x-} is the anion of the salt.

The water-solubility of the substance is generally 0.1 to 50g/l and is preferably 0.2 to 10 g/l for a matt paint and 0.4 to 20 g/l for a gloss paint. The water-solubility figures are measured at a temperature of 20°C.

The most preferred substance capable of reacting with rust is a salt of a carboxylic acid having a substituent which increases its chelating power for iron. The salt is usually a salt of a metal which is at least di-valent, for example a calcium, zinc, manganese, magnesium, barium or aluminium salt. The substituent in the acid which increases its chelating power is a hydroxy, amine, hydroxamine, thiol, keto, aldehyde or oxime group. The salt is preferably a salt of a hydroxy-substituted carboxylic acid, particularly an acid having an alpha-hydroxy group such as citric, tartaric or lactic acid. Examples of salts of amine-substituted carboxylic acids are salts of nitrilo-triacetic acid N(CH₂COOH)₃ or iminodiacetic acid HN(CH₂COOH)₂. Calcium salts, for example calcium tartrate or calcium citrate, are particularly preferred. Barium citrate and zinc citrate are other examples of preferred salts. The salt should preferably not be highly coloured, and salts of the preferred metals mentioned above are in general not highly coloured.

Alternative salts are salts of a 1,3-diketone, for example the zinc or calcium salt of an aliphatic 1,3-diketone having 5 to 10 carbon atoms such as 2,4-pentane-dione. Such salts are generally chelated complex salts but the divalent metal ions generally have a lower formation constant for complexation with diketones than Fe(III) does.

The substance capable of reacting with rust can alternatively be a hydroxamic acid of the formula 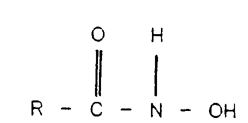 where R is an alkyl group of 1-18 carbon atoms. The hydroxamic acids are very weak acids; even if a salt of hydroxamic acid is used it may exist mainly in the free acid and free base form. The hydroxamic acids are solids. Aceto-hydroxamic acid 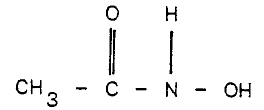 is an example, although it is more water-soluble than the preferred range and should not be used at a high pigment volume concentration. Higher alkyl hydroxamic acids are less water-soluble.

Since the substance capable of reacting with rust which is used according to the present invention forms a complex with Fe(III) which is no less water-soluble than the salt itself, no precipitate is formed on the surface of the paint film. This gives an advantage in appearance; the complex is not noticeable in any colour paint and does not reduce the gloss of the paint.

GB-A-2172599 suggests the use of oxalate salts or salts of a polycarboxylic derivative of a polyamine such as ethylene diamine tetraacetic acid. We have found that in these cases the iron complex, although initially colourless, is light-sensitive so that there is a possibility of discoloration causing a visible blemish. especially in light coloured paints. By contrast, paints according to the present invention appear to remain substantially colourless over prolonged periods of time.

The use of the top coat paint defined above in accordance with the present invention has substantial advantages in cost and convenience over the use of traditional anti-corrosive paints in preventing rust-staining. With traditional methods all the layers of paint have been removed in the area where rust-staining has occurred and the metal surface has been cleaned of rust and then painted with an anti-corrosive primer and a top coat paint. The top coat paint defined above in accordance with the present invention can be applied over existing coats of paint, thereby hiding existing rust-staining and inhibiting further rust-staining. Alternatively, if the rust-staining emanates from an isolated damage site in the coated surface itself, the position and extent of damage is more easily seen and the coating system can be repaired in a limited area.

The pigment volume concentration of the paint is preferably at least 25 per cent. The solid substance capable of reacting with rust is regarded as part of the pigment of the paint. Top coat paints for metal surfaces preferably have a pigment volume concentration of 25 - 40 per cent; this is higher than that of conventional gloss top coat paints but allows the paint to have some sheen. Paints for concrete and other masonry preferably have a pigment volume concentration of 40 - 55 per cent. The rate of release of the active salt from the paint by contact with moisture increases as the total pigment volume concentration (PVC) of the paint increases. In particular the rate of release increases sharply with PVC as the PVC rises above 30 per cent and especially above 35 per cent.

The substance capable of reacting with rust is generally used as 2 - 70 per cent by volume of the total pigment in the paint. Preferably it constitutes 5 - 35 per cent by volume of the total solids content of the paint. The remainder of the total pigment can be an inert pigment, for example of the type conventionally used in exterior paints, e.g. titanium dioxide or a colouring pigment such as a phthalocyanine.

The film-forming binder for the top coat paint defined above in accordance with the present invention can in general be any of those used in the paint industry, for example an alkyd resin (including modified alkyds), an epoxy resin (including epoxy esters), an oleoresin, a chlorinated rubber, a vinyl resin, a polyurethane, a polyether, an organic or inorganic silicate, a polyamide or an acrylic polymer. Two or more compatible film-forming organic polymers can be used in the paint. An extender resin such as a hydrocarbon resin can be present. A plasticiser for the binder resin, for example a chlorinated paraffin or a low molecular weight resin such as an acrylic resin or a polybutene, may be used. A preferred binder for a masonry paint is for example an acrylic polymer such as a copolymer of one or more alkyl acrylates and methacrylates, preferably a styrene/acrylic copolymer containing 25 - 75 per cent by weight acrylic ester units and 25 - 75 per cent styrene units. Top coat paints for use over a primer on metallic structures can for example use such an acrylic binder, preferably a styrene/ acrylic ester copolymer and/or an alkyd resin. The presence of a plasticiser is highly preferred with such styrene/acrylic copolymers.

The rate of release from the paint by contact with moisture of the substance capable of reacting with rust increases with increasing plasticiser content of the paint, particularly at high plasticiser levels. For example, at a PVC of 35 per cent the rate of release increases significantly as the plasticiser level increases above 25 per cent by volume of total polymer plus plasticiser, and it more than doubles as the proportion of plasticiser increases from 30 to 40 per cent by volume.

The top coat paint defined above in accordance with the present invention is preferably applied from solution in an organic solvent. The solvent is chosen having regard to the nature of the film-forming binder and plasticiser if used and can for example be an aromatic hydrocarbon and/or an aliphatic hydrocarbon. The paint can alternatively be applied from an emulsion, for example using an acrylic emulsion polymer binder. The paint is generally applied by spray, brush or roller. Alternatively the paint can be a coil coating to be applied as a plastisol or hot melt or a powder coating to be applied by electrostatic spray, for example to cladding which is to be used at the exterior surface of a building.

The invention is illustrated by the following examples of top coat paints to be applied over a primer to a metal surface. The paints can be prepared by conventional paintmixing techniques.

### Examples

| **Substance** | **Description** | **Example 1** | | **Example 2** | | **Example 3** | |
|---|---|---|---|---|---|---|---|
| | | Vol | Wt | Vol | Wt | Vol | Wt |
| Calcium citrate | Ca₃(C₆H₅O₇)₂.4H₂O | 7.9 | 14.1 | - | - | - | - |
| Zinc citrate | Zn₃(C₆H₅O₇)₂.2H₂O | - | - | 8.2 | 14.2 | - | - |
| Calcium tartrate | CaC₄H₄O₆.4H₂O | - | - | - | - | 7.8 | 13.2 |
| Rutile | Titanium dioxide | 4.02 | 14.8 | 4.02 | 14.9 | 5.53 | 19.5 |
| Bentone 38 | Organo clay gellant | 0.30 | 0.50 | 0.32 | 0.53 | 0.30 | 0.48 |
| | Plasticising resin | 5.88 | 5.65 | 6.85 | 6.61 | 7.0 | 6.44 |
| Pliolite | Styrene/acrylic ester copolymer | 16.9 | 16.3 | 15.5 | 15.0 | 14.3 | 13.2 |
| Solvents | Petroleum naphtha and white spirit | 65.0 | 48.7 | 65.1 | 48.8 | 65.0 | 47.2 |

## Claims

1. Use of a top coat paint for protecting a surface from external rust-staining, comprising a film-forming binder and a solid substance having a water-solubility of at least 0.1 gram per litre and capable of reacting with rust, characterised in that the substance capable of reacting with rust is capable of chelating iron and has a high formation constant for complexation with Fe(III), the chelate formed with Fe(III) being substantially colourless and remaining substantially colourless over prolonged periods of time and being no less water-soluble than the said substance, the said substance being
(a) a salt of an aliphatic carboxylic acid substituted by a hydroxy, amine, hydroxyamine, thiol, keto, aldehyde or oxime group, or
(b) a salt of a 1,3-diketone, or
(c) an aliphatic hydroxamic acid of the formula 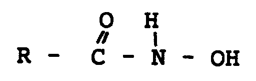 in which R is an alkyl group of 1 to 18 carbon atoms.

2. The use according to claim 1, characterised in that the salt is a citrate, tartrate or lactate.

3. The use according to claim 1 or 2, characterised in that the salt is a calcium salt.

4. The use according to claim 1 or 2, characterised in that the salt is a zinc, manganese, magnesium, barium or aluminium salt.

5. The use according to claim 1, characterised in that the substance capable of reacting with rust is a salt of 2, 4-pentanedione.

6. The use according to claim 1, characterised in that the substance capable of reacting with rust is an aliphatic hydroxamic acid of the formula given in claim 1 in which R is an alkyl group of 2 to 18 carbon atoms.

7. The use according to claim 1, characterised in that the substance capable of reacting with rust has a formation constant for complexation with Fe(III) greater than 10⁰ mole ⁻¹.

8. The use according to any of claims 1 to 7 characterised by the presence of a pigment volume concentration of 25% to 55% in the paint, the substance capable of reacting with rust being counted as a pigment for the purposes of the pigment volume concentration.

9. The use according to claim 8, characterised in that the substance capable of reacting with rust has a water-solubility of 0.4 to 20 grams per litre and the paint has a pigment volume concentration of 25% to 40%.

10. The use according to claim 8, characterised in that the substance capable of reacting with rust has a water-solubility of 0.2 to 10 grams per litre and the paint has a pigment volume concentration of 35% to 55%.

11. The use according to any of claims 8 to 10, characterised in that the substance capable of reacting with rust is used as 5% to 35% by volume of the total solids content of the paint.

12. The use according to any of claims 1 to 11, characterised in that the film-forming binder contained in the paint is an acrylic polymer.

13. The use according to claim 12, characterised in that the acrylic polymer is a plasticised styrene acrylic ester copolymer.

14. A process for protecting a surface from external rust-staining, characterised in that a top coat paint as defined in any of claims 1 to 13 is applied to the external surface of a structure exposed to the atmosphere or to a construction material intended for use at the external surface of a structure exposed to the atmosphere.

15. A process according to claim 14, characterised in that the surface is a metal surface which has previously been coated.

16. A process according to claim 14, characterised in that the surface is a wood, brick, concrete, plaster, plastics or fibre-board surface.

## Patentansprüche

1. Verwendung einer Deckanstrichmasse zum Schutz einer Oberfläche vor externen Rostflecken, die ein filmbildendes Bindemittel und eine Feststoffsubstanz mit einer Wasserlöslichkeit von mindestens 0,1 Gramm pro Liter enthält und gegenüber Rost reaktionsfähig ist, dadurch gekennzeichnet, daß die gegenüber Rost reaktionsfähige Substanz zur Chelatbildung mit Eisen befähigt ist und eine hohe Fe(III)-Komplexbildungskonstante besitzt, wobei das mit Fe(III) gebildete Chelat im wesentlichen farblos ist und über einen längeren Zeitraum im wesentlichen farblos bleibt und nicht weniger wasserlöslich ist als die genannte Substanz, bei der es sich um
(a) ein Salz einer durch eine Hydroxyl-, Amin-, Hydroxyamin-, Thiol-, Keto-, Aldehyd- oder Oximgruppe substituierten aliphatischen Carbonsäure oder
(b) ein Salz eines 1,3-Diketons oder
(c) eine aliphatische Hydroxamsäure der Formel 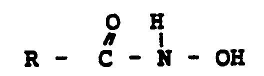 handelt, worin R eine Alkylgruppe mit 1 bis 18 Kohlenstoffatomen bedeutet.

2. Verwendung nach Anspruch 1, dadurch gekennzeichnet, daß das Salz ein Citronensäure-, Weinsäure- oder Milchsäuresalz ist.

3. Verwendung nach Anspruch 1 oder 2, dadurch gekennzeichnet, daß das Salz ein Calciumsalz ist.

4. Verwendung nach Anspruch 1 oder 2, dadurch gekennzeichnet, daß das Salz ein Zink-, Mangan-, Magnesium-, Barium- oder Aluminiumsalz ist.

5. Verwendung nach Anspruch 1, dadurch gekennzeichnet, daß die gegenüber Rost reaktionsfähige Substanz ein 2,4-Pentandion-Salz ist.

6. Verwendung nach Anspruch 1, dadurch gekennzeichnet, daß die gegenüber Rost reaktionsfähige Substanz eine aliphatische Hydroxamsäure der in Anspruch 1 angegebenen Formel ist, worin R eine Alkylgruppe mit 2 bis 18 Kohlenstoffatomen bedeutet.

7. Verwendung nach Anspruch 1, dadurch gekennzeichnet, daß die gegenüber Rost reaktionsfähige Substanz eine Fe(III)-Komplexbildungskonstante von mehr als 10⁰ Mol⁻¹ besitzt.

8. Verwendung nach einem der Ansprüche 1 bis 7, dadurch gekennzeichnet, daß in der Anstrichmasse eine Pigmentvolumenkonzentration von 25% bis 55% vorliegt, wobei die gegenüber Rost reaktionsfähige Substanz zum Zweck der Pigmentvolumenkonzentration als Pigment zählt.

9. Verwendung nach Anspruch 8, dadurch gekennzeichnet, daß die gegenüber Rost reaktionsfähige Substanz eine Wasserlöslichkeit von 0,4 bis 20 Gramm pro Liter besitzt und die Anstrichmasse eine Pigmentvolumenkonzentration von 25% bis 40% aufweist.

10. Verwendung nach Anspruch 8, dadurch gekennzeichnet, daß die gegenüber Rost reaktionsfähige Substanz eine Wasserlöslichkeit von 0,2 bis 10 Gramm pro Liter besitzt und die Anstrichmasse eine Pigmentvolumenkonzentration von 35% bis 55% aufweist.

11. Verwendung nach einem der Ansprüche 8 bis 10, dadurch gekennzeichnet, daß die gegenüber Rost reaktionsfähige Substanz in einer Menge von 5 bis 35 Vol.-%, bezogen auf den Gesamtfeststoffgehalt der Anstrichmasse, eingesetzt wird.

12. Verwendung nach einem der Ansprüche 1 bis 11, dadurch gekennzeichnet, daß das in der Anstrichmasse enthaltene filmbildende Bindemittel ein Acrylpolymer ist.

13. Verwendung nach Anspruch 12, dadurch gekennzeichnet, daß das Acrylpolymer ein weichmacherhaltiges Styrol-Acrylsäureester-Copolymer ist.

14. Verfahren zum Schutz einer Oberfläche vor externen Rostflecken, dadurch gekennzeichnet, daß eine Deckanstrichmasse nach einem der Ansprüche 1 bis 13 auf die Außenfläche einer der Atmosphäre ausgesetzten Struktur oder auf ein zur Verwendung an der Außenfläche einer der Atmosphäre ausgesetzten Struktur vorgesehenes Baumaterial aufgetragen wird.

15. Verfahren nach Anspruch 14, dadurch gekennzeichnet, daß es sich bei der Oberfläche um eine vorbeschichtete Metalloberfläche handelt.

16. Verfahren nach Anspruch 14, dadurch gekennzeichnet, daß es sich bei der Oberfläche um eine Holz-, Ziegelstein-, Beton-, Verputz-, Kunststoff- oder Faserplattenoberfläche handelt.

## Revendications

1. Utilisation d'une peinture pour finition pour protéger une surface contre les taches de rouille externes, comprenant un liant filmogène et une substance solide ayant une solubilité dans l'eau d'au moins 0,1 gramme par litre et capable de réagir avec la rouille, caractérisée en ce que la substance capable de réagir avec la rouille est capable de chélater le fer et possède une constante de formation élevée pour la complexation avec Fe(III), le chélate formé avec Fe(III) étant essentiellement incolore et restant essentiellement incolore pendant des durées prolongées et n'étant pas moins soluble dans l'eau que ladite substance, ladite substance étant
(a) un sel d'un acide carboxylique aliphatique substitué par un groupe hydroxy, amine, hydroxylamine, thiol, céto, aldéhyde ou oxime, ou
(b) un sel d'une 1,3-dicétone, ou
(c) un acide hydroxamique aliphatique de formule 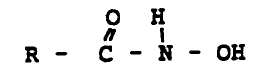 dans laquelle R est un groupe alkyle de 1 à 18 atomes de carbone.

2. Utilisation selon la revendication 1, caractérisée en ce que le sel est un citrate, un tartrate ou un lactate.

3. Utilisation selon la revendication 1 ou 2, caractérisée en ce que le sel est un sel de calcium.

4. Utilisation selon la revendication 1 ou 2, caractérisée en ce que le sel est un sel de zinc, de manganèse, de magnésium, de baryum ou d'aluminium.

5. Utilisation selon la revendication 1, caractérisée en ce que la substance capable de réagir avec la rouille est un sel de 2,4-pentanedione.

6. Utilisation selon la revendication 1, caractérisée en ce que la substance capable de réagir avec la rouille est un acide hydroxamique aliphatique de formule donnée dans la revendication 1, dans laquelle R est un groupe alkyle de 2 à 18 atomes de carbone.

7. Utilisation selon la revendication 1, caractérisée en ce que la substance capable de réagir avec la rouille possède une constante de formation pour la complexation avec Fe(III) supérieure à 10⁰ mole⁻¹.

8. Utilisation selon l'une quelconque des revendications 1 à 7, caractérisée par la présence d'une concentration volumique de pigment de 25% à 55% dans la peinture, la substance capable de réagir avec la rouille étant comptée comme pigment pour les besoins de la concentration volumique de pigment.

9. Utilisation selon la revendication 8, caractérisée en ce que la substance capable de réagir avec la rouille possède une solubilité dans l'eau de 0,4 à 20 grammes par litre et en ce que la peinture possède une concentration volumique de pigment de 25% à 40%.

10. Utilisation selon la revendication 8, caractérisée en ce que la substance capable de réagir avec la rouille possède une solubilité dans l'eau de 0,2 à 10 grammes par litre et en ce que la peinture possède une concentration volumique de pigment de 35% à 55%.

11. Utilisation selon l'une quelconque des revendications 8 à 10, caractérisée en ce que la substance capable de réagir avec la rouille est utilisée à raison de 5% à 35% en volume de la teneur totale en extrait sec de la peinture.

12. Utilisation selon l'une quelconque des revendications 1 à 11, caractérisée en ce que le liant filmogène contenu dans la peinture est un polymère acrylique.

13. Utilisation selon la revendication 12, caractérisée en ce que le polymère acrylique est un copolymère styrène/ester acrylique plastifié.

14. Procédé de protection d'une surface contre les taches de rouille externes, caractérisé en ce que l'on applique une peinture de finition telle que définie dans l'une quelconque des revendications 1 à 13 sur la surface externe d'une structure exposée à l'atmosphère ou sur un matériau de construction destiné à être utilisé sur la surface externe d'une structure exposée à l'atmosphère.

15. Procédé selon la revendication 14, caractérisé en ce que la surface est une surface métallique qui a été enduite au préalable.

16. Procédé selon la revendication 14, caractérisé en ce que la surface est une surface de bois, de brique, de béton, de plâtre, de matière plastique ou de panneau de fibres.
